# EUROPEAN PATENT APPLICATION

(11) **EP 1 728 606 A1**
(43) Date of publication of application: **06.12.2006**
(21) Application number: 06010044.3
(22) Date of filing: 16.05.2006
(51) Int. Cl.: B27B 31/00

(54) **Sheet handling and cutting-up system and method for the handling and cutting-up of mainly sheets of wood and use hereof**

(30) Priority: 02.06.2005 DK 200500812
(71) Applicant: Giben Scandinavia A/S, 5260 Odense S (DK)
(72) Inventor: Fuglsang, Poul, 5230 Odense M (DK)
(74) Representative: Olesen, Kaj

(57) **Abstract**

The invention relates to a sheet handling and cutting-up system (1) for handling and cutting-up mainly sheets of wood. The system (1) comprises at least one robot (19), at least one stack transport carriage (9) and at least one sheet saw (15). The system is characterised in that the robot (19) comprises a carriage (10) for horizontal transport of said robot (19) and in that the feeding of uncut sheets (7, 8) to the sheet saw (15) is carried out by the stack transport carriage (9) or by the robot (19), or by the robot (19) and the stack transport carriage (9) in mutual cooperation.

The invention also relates to a method for handling and cutting-up of sheets by means of the above-mentioned sheet handling and cutting-up system (1) and use of the system (1) and the method, whereby handling and cutting-up is carried out in a fully automatic manner.

## Description

### Scope of the invention

The present invention relates to a sheet handling and cutting-up system for handling and cutting-up mainly sheets of wood according to the preamble to claim 1, and a method for handling and cutting-up of mainly sheets of wood and use hereof.

### Technical background

Sheet handling and cutting-up systems have been known for a long time, and especially within the furniture and woodworking industries it has been known to use sheet handling and cutting-up systems e.g. in the form of single-saw cutting plants for the cutting-up of mainly large sheets of wood.

Single-saw cutting plants typically consist of a more or less fully automatic sheet dividing plant, where sheets or stacks of sheets are fed manually, and where the fully cut-up sheet parts are removed manually. The cutting-up of the sheets also involves manual operation, typically where the sheets are first cut lengthwise and then as a rule turned manually and fed manually into the sheet saw again for further cutting-up.

This manual operation is disadvantageous for the reason that the person or persons who carry out the operation are heavily loaded by the uniform repetitive work. Moreover, neither is it advantageous to work close to a sheet cutting-up saw, as this can generate both noise and dust.

Where the stacking of the finished cut-up items is concerned, it is also known from patent application EP 20000204094 to use a robot equipped with a gripper for the operation of a sheet cutting plant. However, the sheet cutting-up plant must still be fed manually, which for the above-mentioned reasons is inexpedient.

The object of the invention is to provide a sheet handling and cutting-up system which does not involve the inconveniences and the problems with the known technique. It is a particular object of the invention to provide a system which in a simple, inexpensive and efficient manner can carry out the operation of a sheet saw fully automatically, including the handling of single sheets and stacks of sheets or sheet parts.

### The invention

The invention comprises a sheet handling and cutting-up system for the handling and cutting-up of mainly sheets of wood, comprising at least one robot, at least one stack transport carriage, and at least one sheet saw, characterised in that the robot comprises a carriage for horizontal transport of said robot and in that the feeding of uncut sheets to the sheet saw is effected by the stack transport carriage or by the robot, or by the robot and the stack transport carriage in mutual cooperation.

It is advantageous that the robot comprises a carriage which can transport the robot around, since this gives the robot a considerably greater working radius, which offers the possibility of the robot being able to handle more tasks than can be effected by a stationary robot, e.g. the robot can stack finished items in many different positions over a large area.

It is advantageous to let the stack transport carriage or the robot, or the robot and the stack transport carriage in mutual cooperation, carry out the feeding of uncut sheets or stacks of uncut sheets to the saw, and whereby a considerable saving in time and handling is achieved and manual work in this connection is avoided. Moreover, by means of robot comprising a carriage, the possibility is provided that stacks containing many different types of uncut sheets can be made, which are plucked by the robot out of the sheet store and placed in standard pallet shelves for use in small production batches.

It should be emphasised, that by the term "carriage" is to be understood any kind of vehicle, sledge, trolley or other kinds of arrangements capable of transporting another object. The term "carriage" does in this context not imply whether it comprises wheels or not or whether it is self-propelled or non-driven.

It is an aspect of the invention that at least one of said at least one robot is a free-arm robot.

It is an advantage to use a free-arm robot for the reason that it is a cheap and effective way in which to automate manual work processes.

It is an aspect of the invention that the stack transport carriage comprises means for feeding uncut sheets to said sheet saw in stacks with more than one uncut sheets stacked on top of one another.

With the use of a sheet saw which is provided with a lifting table which feeds from the rear of the machine, the stack transport carriage will be able to feed the saw with new full stacks while the robot works in front of the saw.

With the use of a saw without a feeding table, in cooperation with the robot the stack transport carriage can be moved into a position which makes it possible for the robot to feed sheets from the carriage to the saw, and hereby work more efficiently.

Providing that it is possible, it is always advantageous to feed the saw with uncut sheets in stacks, since this is much more efficient than feeding with single sheets.

It is an aspect of the invention that the handling, sorting and removal of the fully-cut-up sheet parts or partly-cut-up sheet parts from or at said sheet saw can take place either in single sheets or in stacks, with more than one fully-cut sheet parts or partly-cut sheet parts stacked on top of one another.

Another aspect is that providing that a single sheet is being cut, the robot can stack the "strips" cut by the saw on top of one another, so that these can finally be cut transversely in a stack instead of in several single sheets.

It is also advantageous that the handling, sorting and removal of the fully-cut sheet parts or party-cut sheet parts from the sheet saw can be carried out in stacks, since this is much more efficient than working with single sheets.

The expression "partly-cut sheet parts" and/or "strips" shall be understood to mean sheet parts which have not been fully cut, i.e. typically sheet parts which have been cut in the one direction but remain to be cut in the other direction.

It is an aspect of the invention that the handling, sorting and removal of the fully-cut sheet parts or partly-cut sheet parts from or at said sheet saw is carried out by said robot.

The robot which can be used to make stacks for the feeding of the saw can with advantage also be used for the handling, sorting and removal of sheet parts at the output side of the sheet sawing plant, hereby achieving an advantageous utilisation of the robot's possibilities, and whereby all manual work at the saw is avoided in an inexpensive and effective manner.

It is an aspect of the invention that said at least one stack transport carriage and said at least one robot use the same carriageway, where said carriageway could e.g. be a rail system.

Out of regard for space, it is advantageous that the stack transport carriage and the robot use the same carriageway.

It is an aspect of the invention that said at least one stack transport carriage and said at least one robot are driven and controlled independently of each other.

It is advantageous that the stack transport carriage and the robot can move around independently of each other, since this provides the possibility of them being able to carry out different tasks simultaneously.

It is an aspect of the invention that said robot can handle stacks of fully-cut sheet parts or partly-cut sheet parts, and also whole single sheets.

It is advantageous that the robot can handle stacks of sheet parts as well as whole uncut sheets, since this provides the possibility of utilising the robot for several different tasks.

It is an aspect of the invention that the robot is provided with a tool exchanging system, hereby enabling the robot's tools to be changed to the type which is suitable for the task.

The invention also relates to a method for the handling and cutting-up of sheets by means of the sheet handling and cutting-up system according to one or more of the claims 1 to 8.

The invention further relates to the use of a sheet handling and cutting-up system according to one or more of the claims 1 to 8 and method according to claim 9, whereby handling and cutting-up is carried out in fully automatic manner.

The invention also relates to the use of a sheet handling and cutting-up system according to claim 10, where said sheet saw is one or more single-saw cutting plants.

### The drawing

In the following, the invention will be explained in more detail with reference to the drawings, where
fig.1 shows an example of a layout and an embodiment of a sheet handling and cutting-up system seen from above,
fig. 2 shows the same embodiment as shown in fig. 1 seen from the side,
fig. 3 shows the same embodiment as shown in fig. 1, while the sheet saw cuts up sheets,
fig. 4 shows the same embodiment as shown in fig. 1, while the robot changes tools, and
fig. 5 shows the same embodiment as shown in fig. 1, while the robot plucks single sheets.

### Detailed description

The present invention relates to a plant for the handling, i.e. turning, intermediate storing and feeding, and the de-stacking of sheet items at a cutting-up plant by means of a free-arm robot. Also, sheet handling in the feeding of single sheets or full stacks to the cutting-up plant, similarly by means of a free-arm robot and in combination with a separate carriage.

It is an aspect of the invention that the robot and the stack transport carriage run on a rail system, which makes it possible for the robot to "pluck" sheets from a standard shelving system in several storeys in an almost infinitely large sheet store with many different types of sheets.

The sheets which are thus plucked from the shelf store are placed on the co-running stack transport carriage. When there is a full stack, the robot moves to the saw for the handling of the sheet items on the front side of the saw, and the stack transport carriage runs along to the saw and delivers the stack to the saw, either by feeding-in from the rear of the saw in an automatic manner, or feeding-in from the front of the saw by means of the robot. Moreover, the stack transport carriage can independently fetch full stacks from the lower storey of the shelving system and deliver them to the saw.

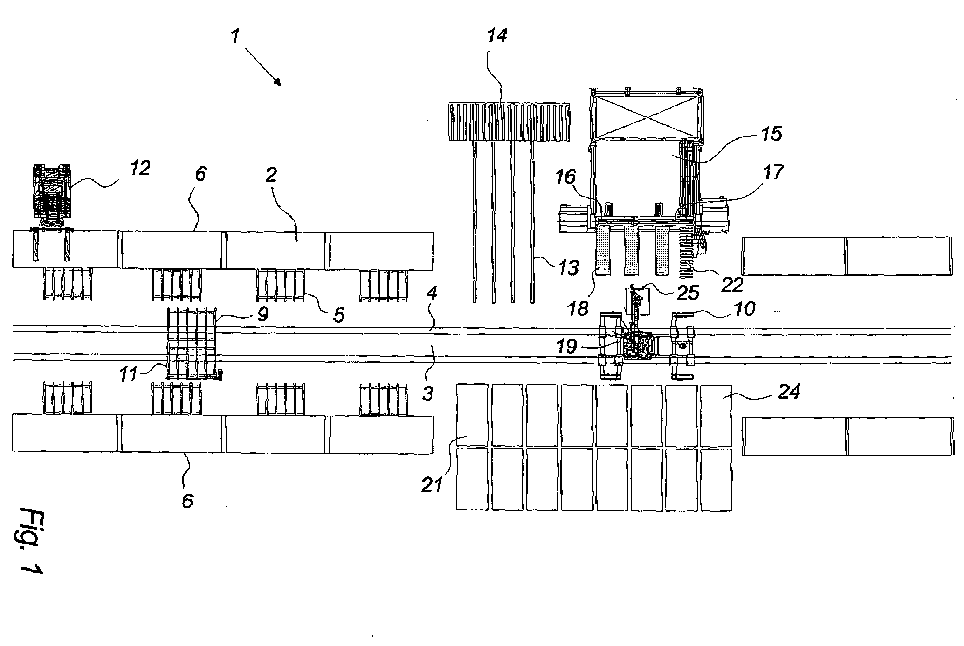

Fig. 1 shows a layout of a fully automatic system 1 for sheet cutting and handling. In this embodiment, the system consists of a series of shelves 2 for uncut sheets set up on the one side or on each side of a carriageway 3. These shelves 2 can be of a standard type which is known from most storage facilities.

On these raw sheet shelves 2 there can be placed different kinds of stacks 8 of sheets. The system is chiefly for the cutting-up and handling of sheets which can be in many different thicknesses, with different surfaces, appearances, qualities etc. The uncut sheets 7 in the individual stacks 8 will probably be identical, but since the system 1 can comprise a very large number of shelves 2, it can handle and cut-up a very large number of different types of sheets.

In this case, the carriageway 3 consists of a centrally-placed rail system 4, but it could also merely be free space for independent carriages or the like.

Under some of or under all of the uncut-sheet shelves 2 there is placed a stack conveyor 5, e.g. in the form of a driven chain conveyor, a conveyor belt or the like. On these stack conveyors there can be placed the same variation of sheet stacks 8 as on the shelves 2. The uncut-sheet shelves 2 and the stack conveyors 5 can be fed from the rear 6 with uncut sheets 7 or stacks of uncut sheets 8, e.g. by means of a fork-lift truck 12. This makes it possible for the shelves 2 and the stack conveyors 5 to be filled during operation. With a second embodiment of the invention, this system 1 could merely comprise uncut-sheet shelves 2, or comprise only stack conveyors 5 possibly placed in several levels on top of one another.

Together, the shelves 2 and the stack conveyors 5 constitute a store for uncut sheets, which typically will be structured and well-arranged, where each stack 8 of sheets contains sheets 7 of the same type, and where each type has a fixed place. It will thus typically not be a chaos store where uncut-sheet stacks 8 and even single sheets 7 do not have fixed places.

A number of carriages can run on the rail system 4 between the uncut-sheet shelves 2, and in this embodiment a stack transport carriage 9 and a robot carriage 10 are running on said rail system 4.

With another embodiment of the invention, the system 1 does not comprise a stack transport carriage 9. One or more robots will thus handle not only the tasks of feeding the saw 15 with uncut sheets 7 or stacks of uncut sheets 8, but also the handling, turning, sorting, removal and stacking of the fully-cut or partly-cut sheet parts 20, 23 at the discharge end of the sheet saw 15.

The top of the stack transport carriage 9 is equipped with a driven chain conveyor 11, and it could possibly also be provided with a driven lifting arrangement which makes it possible to raise the conveyor up to different levels, or it could be equipped with a driven turning arrangement which makes it possible for the stacks to be turned, e.g. 90° or 180°.

Placed on the carriageway 3 or the rail system 4 there is also a robot 19 on a robot carriage 10. In this case the robot 19 is a free-arm robot, characterised in that it has the possibility of moving possible equipment or tools mounted on the end of the arm freely in the space within reach of the robot.

At a point along the carriageway 3 or the rail system 4 there is placed a sheet saw 15 which will typically be a single-saw cutting plant. Single-saw cutting plants are characterised in that the sheets are cut fully automatically in only the one direction, after which the sheets must be turned manually and fed in again if they are to be cut in the other direction.

Immediately at the side of this there is placed a driven buffer conveyor 13. Placed transversely at the end of this buffer conveyor 13 there is a driven transverse conveyor 14.

As shown in fig. 1, a number of finished-product places 21 and possibly also a stack of euro-pallets 24 are placed close to the sheet saw 15. Depending on the space and the needs, the system can in principle be provided (as is the case with the uncut-sheet shelves 2) with an unlimited number of finished-product places 21.

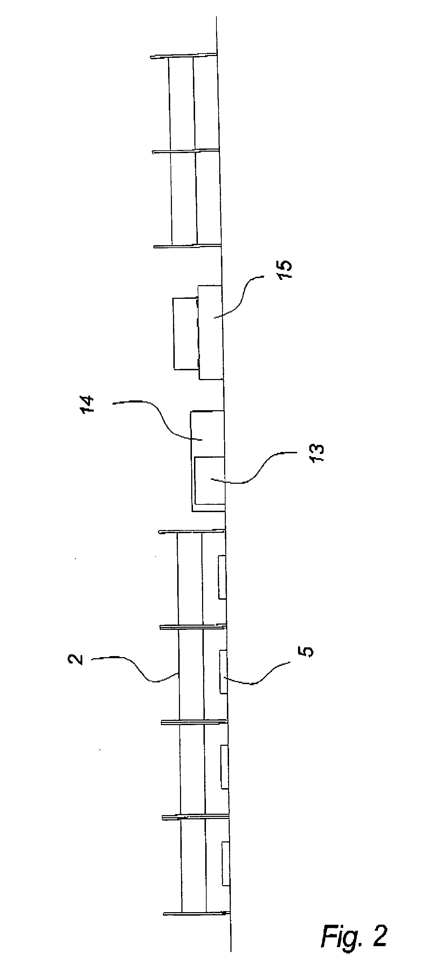

Fig. 2 shows the system seen from the rear of the shelves 2. As will be seen, in this case the shelves 2 comprise two shelves above the floor, but in another embodiment of the invention there could be one, three, four or five shelves. Stack conveyors 5 are placed on the floor under some of the shelves 2.

In this case the shelves 2 and stack conveyors 5 are set up on each side of the sheet saw 15 and the buffer conveyor 13, but in another embodiment of the invention there could be shelves 2 and/or stack conveyors 5 on only the one side of the sheet saw 15 and the buffer conveyor 13.

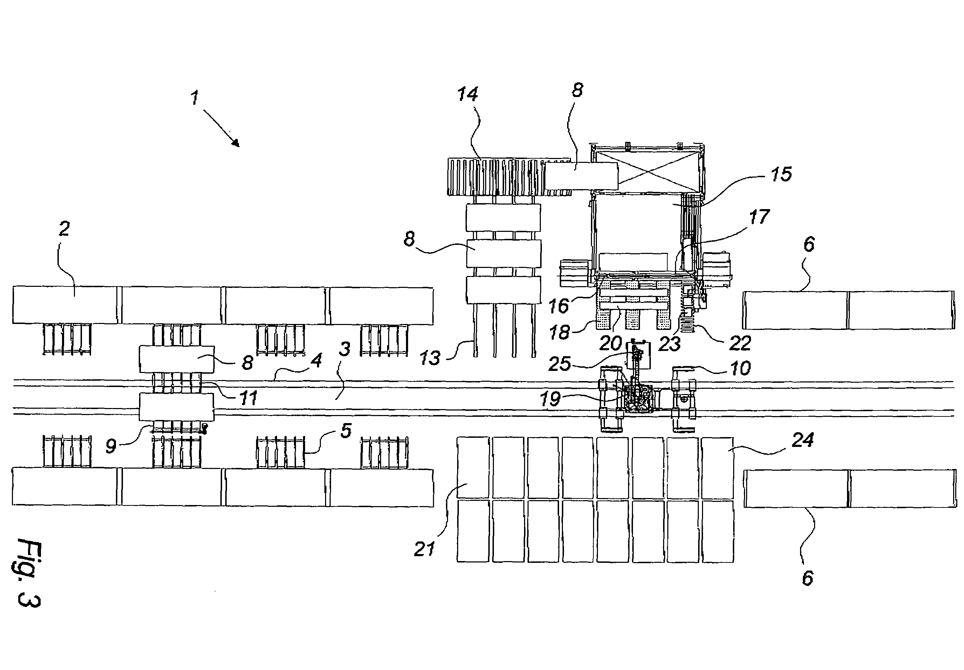

Fig. 3 shows the stack transport carriage 9 stopped in front of one of the stack conveyors 5, where by means of the conveyors a stack 8 of uncut sheets can be transferred to the stack transport carriage 9. Hereafter, this carriage 9 can move via the rail system 4 to the buffer conveyor 13 where the stack 8 can be unloaded. The stack transport carriage 9 can then run back and fetch a new stack 8 of uncut sheets from the same or another stack conveyor 5.

Fig. 3 also shows that on the buffer conveyor 13 there is room for a number of stacks of uncut sheets 8, which are transported forward to the transverse conveyor 14. The transverse conveyor 14 leads one stack 8 of uncut sheets at a time in to the fully automatic sheet saw 15. In the sheet saw 15, by means of a saw 16 and a fixing boom 17, stacks of sheets of up to 120 mm in height or single sheets 7 are first cut in the direction of movement of the sheet, which most often is in the lengthwise direction of the sheet. The lengthwise-cut sheet parts 20 are pushed or fed out onto one or more buffer tables 18, from where by means of a gripper 25 a robot 19 can stack the sheet parts 20 and, if they require no further processing, move them to one or more finished-product places 21. The robot 19 can also take the individual lengthwise-cut sheet parts 20 or stacks of sheet parts 20 and turn these approx. 90° and place them on a feed conveyor 22, from which the sheet saw can take over and cut them transversely. Thereafter, the robot 19 will grip and move the fully-cut sheet parts 23 to a finished-product place 21.

The finished-product places 21 could, e.g., be standard euro-pallets, The robot 19 could stack the fully-cut sheet parts 23 on the pallets and, when the pallets are full, a signal could be given to an operator regarding the removal of the full pallet. The pallets could also stand on a conveyor which automatically leads the full pallet away.

When the filled pallet has been removed, the robot 19 could take an empty pallet from a pallet stack 24 by means of its gripper 25 and place it at the empty finished-product place 21.

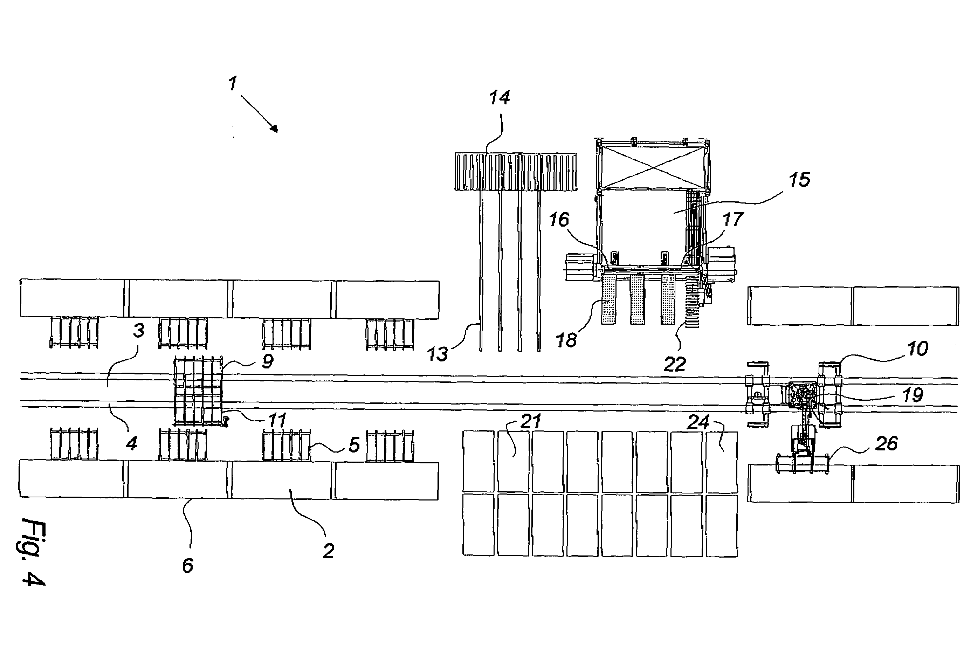

Fig. 4 shows that if the system is to be used for single-sheet production, i.e. where only a single sheet or only few of the different types of sheets are to be cut at a time, the robot runs to a predetermined place where it can change tools. This could be, for example, on a shelf in one of the shelves 2 as shown.

The robot places its gripping tool 25 in a fixture and releases it, after which it mounts itself with a vacuum yoke 26.

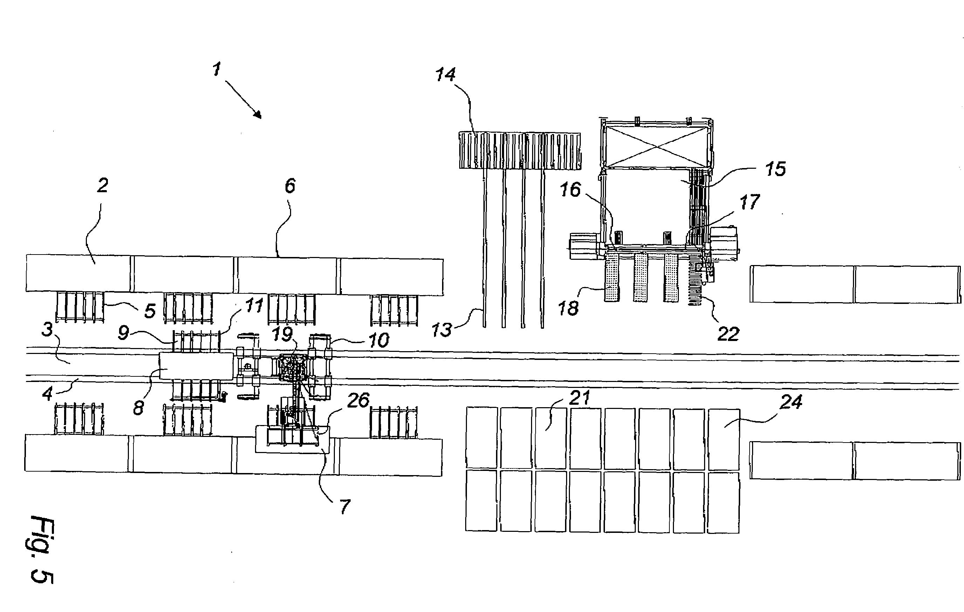

Fig. 5 shows that after the robot 19 has changed tools, the robot carriage 10 with the robot 19 runs down to a sheet shelf 2, and the stack transport carriage 9 takes up a place at the side of the robot carriage 10. On the basis of a programmed production plan, by means of its vacuum yoke 26 the robot 19 plucks single sheets 7 down from the different shelves 2 and/or stack conveyor 5 and places them in a stack 8 on the stack transport carriage 9. When a full stack 8 has been made on the stack transport carriage 9, the stack transport carriage 9 and possibly also the robot carriage 10 runs to the buffer conveyor 13 to which a stack 8 can be delivered. Hereafter, the cutting-up can be resumed with the stack 8 of uncut sheets being fed to the sheet saw 15, and the robot 19 having changed its tools so that it is again equipped with the gripper 25, or the robot 19 and the stack transport carriage 9 can fetch further stacks of single sheets 8.

While the robot 19 plucks single sheets 7 from the shelves 2, the sheet saw 15 stands idle. Therefore, it can be envisaged that the robot 19 and the stack transport carriage 9 use the night hours or pauses to collect a large number of single sheet stacks 8 and place them on the buffer conveyor 13, so that they will stand ready to be cut when there are personnel again present to supervise or remove finished products. However, the system 1 is quite capable of running unmanned in 24-hour operation, merely providing that the correct uncut sheets 7 are accessible in the shelves 2 and that finished-products are removed, and providing that there are no breakdowns, failures or possibly worn parts which need to be replaced.

In another embodiment of the invention, the stack transport carriage 9 could be equipped with an independent robot 19 or other equipment with which to pluck sheets, so that the shown robot 19 can be used exclusively for the operation of the sheet saw.

The whole of the system 1 is controlled by a main control arrangement which coordinates the work procedures, and into which the production sequence can be programmed, downloaded or transferred in another manner.

In the above, the invention is described in connection with concrete embodiments, such as shown in the drawings, but it will be obvious to those familiar with the art that the invention can be varied in innumerable ways within the scope of the subsequent claims.

### List

1. Fully automatic system for sheet cutting and handling
2. Shelves for uncut sheets
3. Carriageway
4. Rail system
5. Stack transport conveyor
6. Rear side of stack transport conveyor and uncut-sheet shelves
7. Uncut sheets
8. Stack of uncut sheets
9. Stack transport carriage
10. Robot carriage
11. Stack transport carriage conveyor
12. Fork-lift truck
13. Buffer conveyor
14. Transverse conveyor
15. Sheet saw
16. Saw
17. Fixing boom
18. Buffer table
19. Robot
20. Lengthwise-cut sheet parts
21. Finished product place
22. Feed conveyor
23. Fully-cut sheet parts
24. Pallet stack
25. Robot gripper
26.. Vacuum yoke

## Claims

1. A sheet handling and cutting-up system (1) for the handling and cutting-up of mainly sheets of wood, comprising
at least one robot (19),
at least one stack transport carriage (9), and
at least one sheet saw (15)
**characterised in that**
said robot (19) comprises a carriage (10) for horizontal transport of said robot (19) and **in that** the feeding of uncut sheets (7,8) to said sheet saw (15) is carried out by said stack transport carriage (9) or by said robot (19), or by said robot (19) and said stack transport carriage (9) in mutual cooperation.

2. A sheet handling and cutting-up system (1) according to claim 1, **characterised in that** at least one of said at least one robots (19) is a free-arm robot.

3. A sheet handling and cutting-up system (1) according to claim 1 or 2, **characterised in that** said stack transport carriage (9) comprises means for feeding uncut sheets (7) to said sheet saw (15) in stacks (8) with more than one uncut sheets (7) stacked on top of one another.

4. A sheet handling and cutting-up system (1) according to one or more of the claims 1 to 3, **characterised in that** the handling, sorting and removal of fully-cut sheet parts or partly-cut sheet parts from or at said sheet saw (15) can take place in stacks with more than one fully-cut sheet parts or partly-cut sheet parts stacked on top of one another.

5. A sheet handling and cutting-up system (1) according to one or more of the claims 1 to 4, **characterised in that** the handling, sorting and removal of fully-cut sheet parts or partly-cut sheet parts from or at said sheet saw (13) is carried out by said robot (19).

6. A sheet handling and cutting-up system (1) according to one or more of the claims 1 to 5, **characterised in that** said at least one stack transport carriage (9) and said at least one robot (19) use the same carriageway (3), where said carriageway (3) could e.g. be a rail system (4).

7. A sheet handling and cutting-up system (1) according to one or more of the claims 1 to 6, **characterised in that** said at least one stack transport carriage (9) and said at least one robot (19) are driven and controlled independently of each other.

8. A sheet handling and cutting-up system (1) according to one or more of the claims 1 to 7, **characterised in that** said robot (19) can handle stacks of fully-cut sheet parts or partly-cut sheet parts and also whole single sheets (7).

9. A method for handling and cutting-up sheets by means of a sheet handling and cutting-up system (1) according to one or more of the claims 1 to 8.

10. Use of a sheet handling and cutting-up system (1) according to one or more of the claims 1 to 8 and method according to claim 9, whereby handling and cutting-up takes place in a fully automatic manner.

11. Use of a sheet handling and cutting-up system (1) according to claim 10, where said sheet saw (15) is one or more single-saw cutting plants.
